# EUROPÄISCHE PATENTSCHRIFT

(11) **EP 2 830 843 B1**
(45) Veröffentlichungstag und Bekanntmachung des Hinweises auf die Patenterteilung: **27.04.2016**
(21) Anmeldenummer: 13713156.1
(22) Anmeldetag: 26.03.2013
(51) Int. Cl.: B29C 35/08, B29C 70/48, B29C 70/44, B29B 13/02

(54) **FASERVERBUND-FERTIGUNGSANLAGE**
FIBER COMPOSITE PRODUCTION SYSTEM
INSTALLATION DE PRODUCTION DE COMPOSITES FIBREUX

(30) Priorität: 26.03.2012 DE 102012102563
(43) Veröffentlichungstag der Anmeldung: 04.02.2015
(73) Patentinhaber: Deutsches Zentrum für Luft- und Raumfahrt e.V., 51147 Köln (DE)
(72) Erfinder: DANILOV, Maksim, 38106 Braunschweig (DE)
(74) Vertreter: Aisch, Sebastian
(86) Internationale Anmeldenummer: PCT/EP2013/056398
(87) Internationale Veröffentlichungsnummer: WO 2013/144143

(56) Entgegenhaltungen:
- GB-A- 2 301 059

## Beschreibung

Die Erfindung betrifft eine Faserverbund-Fertigungsanlage zur Herstellung eines Faserverbundbauteils, das durch Injektion eines Faserhalbzeuges mit einem Matrixharz gebildet wird.

Faserverstärkte Kunststoffe sind innovative Materialien, die einen vielfältigen Anwendungszweck erlauben. Aufgrund ihrer besonderen Eigenschaft, bei einem relativ geringen Gewicht eine hohe Steifigkeit in zumindest eine Richtung aufzuweisen, werden Bauteile aus faserverstärkten Kunststoffe in immer mehr Bereichen eingesetzt, wie beispielsweise im Fahrzeug- oder Flugzeugbau. Selbst lasttragende Bauteile werden heutzutage bereits aus faserverstärkten Kunststoffen hergestellt.

Ein hierbei weit verbreitetes Herstellungsverfahren ist die Injektion eines Matrixharzes bzw. Kunststoffharzes in ein trockenes oder vorgetränktes Faserhalbzeug und Polymerisation des Matrixharzes durch Hinzuführung thermischer Energie. Durch die Harzreaktion werden die Fasern des Faserhalbzeuges eingeschlossen und bilden so ein integrales Bauteil, das in Faserrichtung seine größte Steifigkeit hat.

Insbesondere bei der Herstellung von sicherheitskritischen Bauteilen ist es notwendig, dass das Matrixharz das trockene Fasergelege vollständig infiltriert hat, so dass sämtliche Fasern mit dem Matrixharz benetzt sind. Aufgrund der Eigenschaft des Matrixharzes, bei niedrigen Temperaturen eine hohe Viskosität aufzuweisen, wird das Matrixharz vor der Injektion in das Faserhalbzeug erwärmt, um die Viskosität des Harzes zu senken und so eine vollständige Infiltration des Faserhalbzeuges zu gewährleisten. Denn Harze mit einer hohen Viskosität könne aufgrund der Dichte der Faserhalbzeuge diese meist nicht vollständig infiltrieren.

Der Injektions- sowie Aushärtungsprozess erfolgt meist in einem Ofen oder Autoklaven. Dabei wird sowohl das Matrixharz als auch das Faserhalbzeug durch Zuführung thermischer Energie erwärmt, um so ein optimales Ergebnis erzielen zu können. In klassischen Öfen oder Autoklaven erfolgt die Erwärmung des Materials durch den konvektiven Austausch von Wärme.

In der jüngsten Vergangenheit wurden jedoch mikrowellenunterstützte Erwärmungsverfahren untersucht. Hierbei wird die Injektionskammer, in der sich das Faserhalbzeug zur Injektion und Aushärtung befindet, mit einem elektromagnetischen Mikrowellenfeld beaufschlagt, wobei sich aus der Wechselwirkung mit dem Faserhalbzeug und dem Matrixharz eine dielektrische Erwärmung ergibt. Denn Faserhalbzeuge und das Matrixharz bilden ein Dielektrikum, das bei einem die Materialien umgebenden elektromagnetischen Feld durch ohmsche oder dielektrische Verluste thermische Energie erzeugt. Hierdurch wird es möglich, die benötigten Bauteile gezielt zu erwärmen, ohne dass dabei die thermische Masse der Anlagentechnik und der Fertigungsmittel eine maßgebende Rolle spielen. Da die gezielte Energieübertragung zum zu prozessierenden Material stattfindet und die Wärme direkt prozessgutnah erzeugt wird, werden gezielt nur diejenigen Elemente erwärmt, die für die Herstellung eines qualitativen Bauteils notwendig sind.

Der Innenraum der Injektionskammer muss somit nicht mittels thermischer Energie temperiert werden.

Durch die Verwendung von mikrowellengestützter Erwärmung bei der Herstellung von Faserverbundbauteilen lassen sich die Fertigungszeiten insbesondere aufgrund der mediumfreien Energieübertragung drastisch reduzieren, was die Bauteilkosten senkt und zu einer schnelleren Verfügbarkeit führt. Ein erheblicher Nachteil bei derartigen Fertigungsanlagen und -prozessen besteht jedoch darin, dass die Temperatur des in dem Vorratsbehälter erwärmten Matrixharzes auf dem Weg zum zu infiltrierenden Faserhalbzeug aufgrund von konvektiver Verluste und Wärmestrahlung sinkt, so dass sich deren Viskosität erhöht. Fällt die Temperatur des Matrixharzes unter die benötigte Injektionstemperatur, so besteht die Gefahr, dass das Matrixharz das Faserhalbzeug nicht mehr vollständig infiltriert. Dies würde zwangsläufig zu Ausschuss führen.

Zwischen dem zu infiltrierenden Faserhalbzeug in der Injektionskammer und dem Harzvorratsbehälter ist eine Injektionsleitung vorgesehen, die in der Regel aus einem metallischen Material besteht. Zwar sind zwischen dem Harzvorratsbehälter und der Anlagengrenze Heizschläuche vorgesehen, die das in der Injektionsleitung befindliche Harz durch Zuführung thermischer Energie erwärmen können. Allerdings sind derartige Heizschläuche im Inneren der Injektionskammer aus Gründen der elektromagnetischen Verträglichkeit nicht anwendbar. Da jedoch aufgrund der Verwendung des metallischen Materials eine Abschirmung des darin befindlichen Harzes erfolgt, kann das Harz in der Injektionsleitung nicht durch das elektromagnetische Feld mittels dielektrischer Erwärmung erwärmt werden und kühlt ab. Auch die Injektionsleitung selbst erwärmt sich nicht aufgrund des die Leitung umgebenden elektromagnetischen Mikrowellenfeldes, so dass das in der Injektionsleitung fließende Harz nicht auf der Injektionstemperatur gehalten werden kann. Infolge dessen steigt die Harzviskosität und die Benetzung des Faserhalbzeuges mit dem Matrixharz verläuft nicht optimal. GB-A-2301059 offenbart die Merkmale des Oberbegriffs des Anspruchs 1.

Es ist daher Aufgabe der vorliegenden Erfindung eine verbesserte Faserverbund-Fertigungsanlage anzugeben, bei der trotz Verwendung einer mikrowellenunterstützten Erwärmung eine optimale Benetzung des Faserhalbzeuges mit dem Matrixharz gewährleistet werden kann.

Die Aufgabe wird gelöst mit dem kennzeichnenden Merkmal des Patentanspruchs 1.

Demnach wird eine Faserverbund-Fertigungsanlage zur Herstellung eines Faserverbundbauteils vorgeschlagen, dass eine Injektionskammer aufweist, in die ein mit einem Matrixharz zu iniizierendes Faserhalbzeug zur Herstellung des Faserverbundbauteils einbringbar ist. Derartige Injektionskammern weisen meist einen geschlossenen Bereich (Faradays'scher Käfig) auf, bei dem über eine Tür das Faserhalbzeug in die Kammer einbringbar ist. Mit Hilfe eines elektromagnetischen Feldgenerators lässt sich dann im Inneren der Injektionskammer ein elektromagnetisches Feld erzeugen, dass das Faserhalbzeug in der Injektionskammer umgibt und so das eingebrachte Faserhalbzeug und/oder das in das Faserhalbzeug indizierte Matrixharz erwärmt. Die mit dem Harzvorratsbehälter verbundene Injektionsleitung steht dabei mit dem Faserhalbzeug kommunizierend in Verbindung, so dass das Faserhalbzeug mit dem Matrixharz aus dem Vorratsbehälter infiltriert werden kann.

Um nun die thermischen Verluste beim Transport des Matrixharzes von dem Vorratsbehälter zum Faserhalbzeug zu verringern bzw. auszugleichen, wird erfindungsgemäß vorgeschlagen, dass die Injektionsleitung zumindest ein dielektrisches Material aufweist. Hierdurch wird das dielektrische Material aufgrund des die Injektionsleitung umgebenden elektromagnetischen Feldes erwärmt, was zu einer Erwärmung der Injektionsleitung führt und somit die thermische Verlustenergie reduzieren und ausgleichen kann.

Ein dielektrisches Material ist ein Material, welches elektromagnetische Energie in thermische Energie umwandelt, wenn es von einem elektromagnetischen Feld umgeben ist.

Die Erfinder haben hierbei erkannt, dass die Verwendung von dielektrischem Material bei der Injektionsleitung für sich genommen ausreichend ist, die Verlustleistung auszugleichen, die durch den Transport des Injektionsharzes durch die Injektionsleitung entsteht.

Es wird somit möglich, der Abkühlung des Matrixharzes in der Injektionsleitung beim Transport von dem Harzvorratsbehälter zum Faserhalbzeug entgegenzuwirken, ohne den Anlagenaufbau wesentlich zu verkomplizieren und aktive Erwärmungselemente an den Injektionsleitungen vorzusehen, die die notwendige elektromagnetische Verträglichkeit aufweisen.

Vorteilhafterweise weist das dielektrische Material Kohlefasern auf, die auch in dem Faserhalbzeug Anwendung finden und somit ähnliche dielektrische Eigenschaften aufweisen.

In einer besonders vorteilhaften Ausführungsform ist die Injektionsleitung, die beispielsweise aus einem Metall- oder Kunststoffrohr bestehen kann, von dem dielektrischen Material zumindest teilweise ummantelt, so dass bereits bestehende Anlagen mit derartigen Metall- oder Kunststoffrohren als Injektionsleitungen mit dieser Technik nachgerüstet werden können.

In einer besonders vorteilhaften Ausführungsform handelt es sich hierbei um einen Kohlefaserschlauch als dielektrisches Material, der über das Metall- oder Kunststoffrohr der Injektionsleitung gezogen wird und somit der Injektionsleitung das dielektrische Material bereitstellt.

Der Kohlefaserschlauch kann vorteilhafterweise einen elastischen Haltefaden bzw. elastische Haltefäden in Querrichtung aufweisen, um an Injektionsleitungen mit unterschiedlichen Außendurchmessern variabel angepasst werden zu können. Ein derartiger Kohlefaser-Flexschlauch kann somit für verschiedene Anlagetypen mit unterschiedlichen Injektionsleitungs-Durchmessern verwendet werden und ermöglicht so ein einfaches und kostengünstiges Nachrüsten derartiger Anlagen.

In einer weiteren vorteilhaften Ausführungsform weist die Injektionsleitung weiterhin ein Dämmmaterial bzw. Dämmstoff auf, um so den Wärmeeintrag und die Wärmeabfuhr besser steuern zu können, so dass die Temperatur des Matrixharzes auf die gewünschte Injektionstemperatur eingestellt werden kann.

Die Erfindung wird anhand der beigefügten Figuren beispielhaft näher erläutert. Es zeigen:
- Figur 1: - Anlagenaufbau gemäß vorliegender Erfindung;
- Figur 2: - Detaildarstellung einer Injektionsleitung.

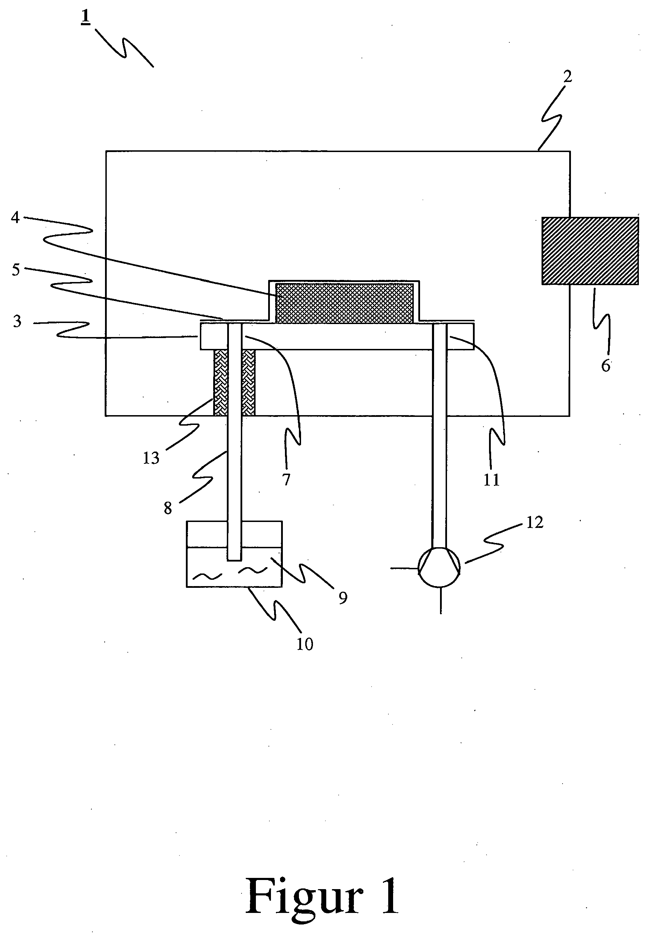

Figur 1 zeigt schematisch eine Faserverbundfertigungsanlage 1, die eine Injektionskammer 2 aufweist. In der Injektionskammer 2 befindet sich ein Formwerkzeug 3, in das ein Faserhalbzeug 4 eingebracht wurde. Mittels einer Vakuumfolie 5 wurde das Faserhalbzeug vakuumdicht an dem Formwerkzeug 3 abgeschlossen.

Die Faserverbund-Fertigungsanlage 1 weist des Weiteren einen elektromagnetischen Feldgenerator 6 auf, der zum Erzeugen eines elektromagnetischen Feldes in der Injektionskammer 2 eingerichtet ist. Das elektromagnetische Feld wird in der Injektionskammer 2 so von dem elektromagnetischen Feldgenerator 6 erzeugt, so dass das Faserhalbzeug 4 von dem elektromagnetischen Feld umgeben ist. Hierdurch entsteht thermische Energie in dem Faserhalbzeug 4.

Das Formwerkzeug 3 ist über einen ersten Anschluss 7 mit einer Injektionsleitung 8 verbunden, die an einem Ende in ein Matrixharz 9, das sich in einem Harzvorratsbehälter 10 befindet, getaucht ist. Die Injektionsleitung 8 steht über den Anschluss 7 am Formwerkzeug 3 mit dem Faserhalbzeug so kommunizierend in Verbindung, dass das Matrixharz 9 des Vorratsbehälters 10 in das Faserhalbzeug 4 injiziert werden kann und so das gesamte Fasergelege infiltrieren kann.

An dem Formwerkzeug 3 ist des Weiteren ein zweiter Anschluss 11 vorgesehen, an dem eine Vakuumpumpe 12 angeordnet wird, um so das Faserhalbzeug 4 evakuieren zu können.

Innerhalb der Injektionskammer ist die Injektionsleitung 8 mit einem dielektrischen Material 13 ummantelt, das beispielsweise ein Kohlenstofffaser-Flexschlauch sein kann, der über die Injektionsleitung 8 in der Injektionskammer 2 gezogen wurde.

Wird nun mit Hilfe des elektromagnetischen Feldgenerators 6 ein elektromagnetisches Mikrowellenfeld, beispielsweise mit einer Frequenz von 2,45 GHz, erzeugt, so wird die Injektionsleitung 8 mit dem dielektrischen Material 13 von dem Feld umgeben. Aufgrund der dielektrischen Eigenschaft wird die elektromagnetische Feldenergie in thermische Energie in dem dielektrischen Material 13 umgewandelt, so dass dies dann aufgrund des konvektiven Wärmeaustausches zu einer Erwärmung der Injektionsleitung 8 führt. Dies wiederum führt dazu, dass das Matrixharz 9, welches durch die Injektionsleitung 8 zum Faserhalbzeug 4 transportiert werden soll, in diesem Bereich nicht abkühlt. Somit kann die Injektionstemperatur gehalten werden und somit die niedrige Viskosität beibehalten werden.

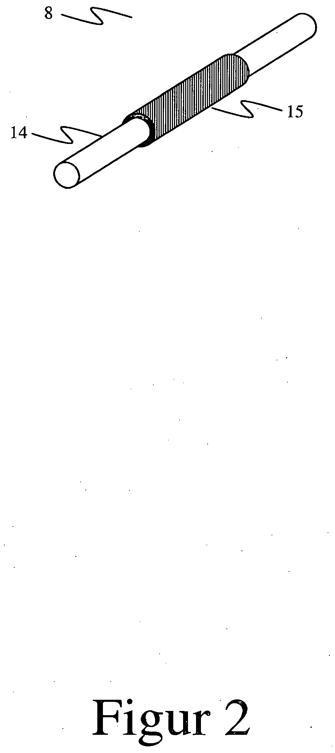

Figur 2 zeigt eine Injektionsleitung 8, die ein Metall- oder Kunststoffrohr 14 hat. Das Metall- oder Kunststoffrohr 14 kann beispielsweise aus einem Kupfermaterial bestehen. Um den Außenumfang des Metall- oder Kunststoffrohres 14 ist ein Kohlenstofffaser-Flexschlauch 15 gelegt, der das Metall- oder Kunststoffrohr 14 zumindest teilweise ummantelt. Durch Einarbeitung von elastischen Haltefäden in Querrichtung kann der Kohlenstofffaser-Flexschlauch flexibel an unterschiedliche Durchmesser des Metall- oder Kunststoffrohres 14 angepasst werden.

## Patentansprüche

1. Faserverbund-Fertigungsanlage (1) zur Herstellung eines Faserverbundbauteils, das durch Injektion eines Matrixharzes (9) in ein Faserhalbzeug (4) gebildet wird, mit
- einer Injektionskammer (2), in die ein mit dem Matrixharz (9) zu injizierendes Faserhalbzeug (4) zur Herstellung des Faserverbundbauteils einbringbar ist,
- einem elektromagnetischen Feldgenerator (6), der zum Erzeugen eines elektromagnetischen Feldes in der Injektionskammer (2) derart ausgebildet ist, dass ein in die Injektionskammer (2) eingebrachtes Faserhalbzeug (4) und/oder das in das Faserhalbzeug (4) injizierte Matrixharz (9) erwärmbar ist, und
- einer mit einem Harzvorratsbehälter (10) verbundenen Injektionsleitung (8) zum Injizieren des in die Injektionskammer (2) eingebrachten Faserhalbzeuges (4) mit dem in dem Harzvorratsbehälter (10) vorhandenen Matrixharz (9),
**dadurch gekennzeichnet, dass** die Injektionsleitung (8) zumindest teilweise ein dielektrisches Material (13, 15) aufweist.

2. Faserverbund-Fertigungsanlage (1) nach Anspruch 1, **dadurch gekennzeichnet, dass** das dielektrische Material (13, 15) Kohlefasern aufweist.

3. Faserverbund-Fertigungsanlage (1) nach Anspruch 1 oder 2, **dadurch gekennzeichnet, dass** die Injektionsleitung (8) ein Metall- oder Kunststoffrohr (14) hat, das von dem dielektrischen Material (13, 15) zumindest teilweise ummantelt ist.

4. Faserverbund-Fertigungsanlage (1) nach Anspruch 3, **dadurch gekennzeichnet, dass** das Metall- oder Kunststoffrohr (14) der Injektionsleitung (8) von einem Kohlefaserschlauch (15) als dielektrisches Material zumindest teilweise ummantelt ist.

5. Faserverbund-Fertigungsanlage (1) nach Anspruch 4, **dadurch gekennzeichnet, dass** der Kohlefaserschlauch (15) elastische Haltefäden für einen variablen Schlauchdurchmesser hat.

6. Faserverbund-Fertigungsanlage (1) nach einem der vorhergehenden Ansprüche, **dadurch gekennzeichnet, dass** die Injektionsleitung (8) zumindest teilweise ein thermisches Dämmmaterial aufweist.

7. Faserverbund-Fertigungsanlage (1) nach einem der vorhergehenden Ansprüche, **dadurch gekennzeichnet, dass** in die Injektionskammer (2) ein Formwerkzeug (3) mit einem in das Formwerkzeug (3) eingebrachten Faserhalbzeuges (4) einbringbar ist und die Injektionsleitung (8) über einen ersten Anschluss (7) des Formwerkzeuges (3) mit dem Faserhalbzeug (4) kommunizierend in Verbindung steht, um das Faserhalbzeug (4) mit dem Matrixharz (9) zu injizieren.

8. Faserverbund-Fertigungsanlage (1) nach Anspruch 7, **dadurch gekennzeichnet, dass** an dem Formwerkzeug (3) ein zweiter Anschluss (11) vorgesehen ist, über den eine Vakuumpumpe (12) zur Evakuierung des Faserhalbzeuges (4) anschließbar ist.

9. Faserverbund-Fertigungsanlage (1) nach einem der vorhergehenden Ansprüche, **dadurch gekennzeichnet, dass** der elektromagnetische Feldgenerator (6) zum Erzeugen eines elektromagnetischen Mikrowellenfeldes eingerichtet ist.

10. Faserverbund-Fertigungsanlage (1) nach einem der vorhergehenden Ansprüche, **dadurch gekennzeichnet, dass** die Injektionskammer (2) ein Autoklav ist.

## Claims

1. Fibre-composite production system (1) for manufacturing a fibre-composite component which is formed by injecting a matrix resin (9) into a semi-finished fibrous product (4), the fibre-composite production system (1) having:
- an injection chamber (2) into which for manufacturing the fibre-composite component a semi-finished fibrous product (4) to be injected with the matrix resin (9) is introducible,
- an electromagnetic field generator (6) which for generating an electromagnetic field in the injection chamber (2) is configured in such a manner that a semi-finished fibrous product (4) which is introduced into the injection chamber (2), and/or the matrix resin (9) which is injected into the semi-finished fibrous product (4), are/is heatable, and
- an injection line (8), connected to a resin storage container (10), for injecting the semi-finished fibrous product (4) which has been introduced into the injection chamber (2) with the matrix resin (9) present in the resin storage container (10),
**characterized in that** the injection line (8) at least partially has a dielectric material (13, 15).

2. Fibre-composite production system (1) according to Claim 1, **characterized in that** the dielectric material (13, 15) has carbon fibres.

3. Fibre-composite production system (1) according to Claim 1 or 2, **characterized in that** the injection line (8) has a metal or plastics tube (14) which is at least partially sheathed by the dielectric material (13, 15).

4. Fibre-composite production system (1) according to Claim 3, **characterized in that** the metal or plastics tube (14) of the injection line (8) is at least partially sheathed by a carbon-fibre tube (15) as the dielectric material.

5. Fibre-composite production system (1) according to Claim 4, **characterized in that** the carbon-fibre tube (15) has elastic mounting threads for a variable tube diameter.

6. Fibre-composite production system (1) according to one of the preceding claims, **characterized in that** the injection line (8) at least partially has a thermal insulation material.

7. Fibre-composite production system (1) according to one of the preceding claims, **characterized in that** a moulding tool (3) having a semi-finished fibrous product (4) which is introduced into the moulding tool (3) is introducible into the injection chamber (2), and the injection line (8), in order for the semi-finished fibrous product (4) to be injected with the matrix resin (9), by way of a first connector (7) of the moulding tool (3) is connected so as to communicate with the semi-finished fibrous product (4).

8. Fibre-composite production system (1) according to Claim 7, **characterized in that** a second connector (11) by way of which a vacuum pump (12) for evacuating the semi-finished fibrous product (4) is connectable is provided on the moulding tool (3).

9. Fibre-composite production system (1) according to one of the preceding claims, **characterized in that** the electromagnetic field generator (6) is adapted for generating an electromagnetic microwave field.

10. Fibre-composite production system (1) according to one of the preceding claims, **characterized in that** the injection chamber (2) is an autoclave.

## Revendications

1. Installation de production de composites fibreux (1) servant à produire une pièce en composite fibreux formée par injection d'une résine de matrice (9) dans un demi-produit fibreux (4), comportant
- une chambre d'injection (2) dans laquelle un demi-produit fibreux (4) dans lequel la résine de matrice (9) doit être injectée peut être introduit afin de produire la pièce en composite fibreux,
- un générateur de champ électromagnétique (6) configuré pour générer un champ électromagnétique dans la chambre d'injection (2) afin de chauffer un demi-produit fibreux (4) introduit dans la chambre d'injection (2) et/ou la résine de matrice (9) injectée dans le demi-produit fibreux (4), et
- une conduite d'injection (8) reliée à un réservoir de résine (10) et servant à injecter la résine de matrice (9) contenue dans le réservoir de résine (10) dans le demi-produit fibreux (4) introduit dans la chambre d'injection (2),
**caractérisée en ce que** la conduite d'injection (8) comporte au moins une partie en matériau diélectrique (13, 15).

2. Installation de production de composites fibreux (1) selon la revendication 1, **caractérisée en ce que** le matériau diélectrique (13, 15) comporte des fibres de carbone.

3. Installation de production de composites fibreux (1) selon la revendication 1 ou 2, **caractérisée en ce que** la conduite d'injection (8) comporte un tube de métal ou de matière plastique (14) qui est au moins partiellement enveloppé du matériau diélectrique (13, 15) .

4. Installation de production de composites fibreux (1) selon la revendication 3, **caractérisée en ce que** le tube de métal ou de matière plastique (14) de la conduite d'injection (8) est au moins partiellement enveloppé d'un tuyau de fibres de carbone (15) en tant que matériau diélectrique.

5. Installation de production de composites fibreux (1) selon la revendication 4, **caractérisée en ce que** le tuyau de fibres de carbone (15) comporte des fils de support élastiques pour un diamètre de tuyau variable.

6. Installation de production de composites fibreux (1) selon l'une quelconque des revendications précédentes, **caractérisée en ce que** la conduite d'injection (8) comporte au moins en partie un matériau thermiquement isolant.

7. Installation de production de composites fibreux (1) selon l'une quelconque des revendications précédentes, **caractérisée en ce qu'**un outil de moulage (3) peut être introduit dans la chambre d'injection (2) avec un demi-produit fibreux (4) introduit dans l'outil de moulage (3) et **en ce que** la conduite d'injection (8) est en liaison de communication par l'intermédiaire d'un premier raccord (7) de l'outil de moulage (3) avec le demi-produit fibreux (4) afin d'injecter dans le demi-produit fibreux (4) la résine de matrice (9).

8. Installation de production de composites fibreux (1) selon la revendication 7, **caractérisée en ce qu'**il est prévu un second raccord (11) sur l'outil de moulage (3) par l'intermédiaire duquel une pompe à vide (12) peut être raccordée pour mettre sous vide le demi-produit fibreux (4).

9. Installation de production de composites fibreux (1) selon l'une quelconque des revendications précédentes, **caractérisée en ce que** le générateur de champ électromagnétique (6) est conçu pour générer un champ électromagnétique micro-ondes.

10. Installation de production de composites fibreux (1) selon l'une quelconque des revendications précédentes, **caractérisée en ce que** la chambre d'injection (2) est un autoclave.
